# EUROPÄISCHE PATENTSCHRIFT

(11) **EP 0 799 779 B1**
(45) Veröffentlichungstag und Bekanntmachung des Hinweises auf die Patenterteilung: **13.08.2003**
(21) Anmeldenummer: 96118507.1
(22) Anmeldetag: 19.11.1996
(51) Int. Cl.: B65G 47/84, B65G 47/71

(54) **Verteileinrichtung**
Distributing device
Dispositif de distribution

(30) Priorität: 01.04.1996 DE 19612911
(43) Veröffentlichungstag der Anmeldung: 08.10.1997
(73) Patentinhaber: Hans Lingl Anlagenbau und Verfahrenstechnik GmbH & Co. KG, D-89231 Neu-Ulm (DE)
(72) Erfinder: Simmen, Klaus, 89257 Illertissen (DE); Simon, Helmut, 86381 Krumbach (DE)
(74) Vertreter: Körber, Martin, Dipl.-Phys.

(56) Entgegenhaltungen:
- DE-A- 1 963 111
- DE-C- 3 141 144
- DE-U- 8 203 977
- US-A- 1 813 130
- US-A- 4 273 496
- US-A- 4 354 590

## Beschreibung

Die Erfindung betrifft eine Verteileinrichtung mit einer ersten Fördervorrichtung, die Artikel hintereinanderliegend fördert, einer zweiten oder weiteren Fördervorrichtung/en, die oberhalb der ersten Fördervorrichtung angeordnet ist und einer Versetzeinrichtung, welche vorbestimmte Artikel von der ersten Fördervorrichtung zur zweiten oder einer weiteren Fördervorrichtung umsetzt.

Bei derartigen Verteileinrichtungen wird ein auf einen Transporteur geförderter Artikelstrom zum Beispiel wegen der begrenzten Leistung nachfolgender Bearbeitungseinrichtungen auf zwei oder mehr Transporteure verteilt.

Bekannt ist es, den Artikelstrom mittels Weichen zu verteilen. Dabei werden die Artikel auf einer ersten Transportbahn, die beispielsweise durch zwei parallel verlaufende Keilriemen gebildet wird, hintereinanderliegend gefördert. Zur Verteilung einer bestimmten Anzahl von Artikeln wird eine Weiche, die beispielsweise von einer zweiten Transportbahn mit enger zusammenliegenden Keilriemen gebildet wird, in die erste Transportbahn eingetaucht. Die nun nachfolgenden Artikel werden mittels der Weiche umgelenkt und können so durch diese auf andere Transportbahnen verteilt werden. Der Vorgang wird beendet, indem die Weiche wieder aus der ersten Transportbahn herausgeschwenkt wird. Nachteilig bei dieser Einrichtung ist jedoch, daß der Zeitaufwand für das Eintauchen und Ausschwenken der Weiche die Leistung der Fördervorrichtung begrenzt.

Weiterhin ist bekannt, mit einer Vorrichtung mit kreisförmig umlaufenden Gabeln oder Klemmvorrichtungen Artikel wahlweise oder alternierend aus einem Artikelstrom von einem ersten Förderband abzuheben und auf eine zweiter darüberliegende Transportbahn abzusetzen. Nachteilig an dieser Vorrichtung ist, daß durch die Richtungsänderung der Ziegel zum Zeitpunkt des Abhebens die Förderleistung begrenzt wird. Ferner wird die Förderleistung durch den komplizierten Klemm- bzw. Greifvorgang, mit dem die umlaufenden Gabeln die Artikel erfassen, begrenzt.

Eine bekannte Vorrichtung ist in der DE 82 03 977 U beschrieben. Diese besteht aus einer Förderbahn, einer oberhalb dieser Förderbahn angeordneten Zweigförderbahn und einer Vorrichtung, welche jeden zweiten von der Förderbahn geförderten keramischen Formling anhebt und der Zweigförderbahn zuführt. Dazu ist ein in die Bewegungsbahn der Formlinge einschwenkbarer Anschlag im Bereich der Förderbahn angeordnet. Weiter ist zu beiden Seiten der Förderbahn je ein doppelseitiger Dreharm angeordnet, der in einer Achse schwenkbar gelagert ist; an den freien Enden der Dreharme sind zur Förderbahn weisende Abhebelemente zum Abheben der Formlinge von der Förderbahn angeordnet und schließlich sind die Abhebelemente derart drehbar ausgebildet, daß sie während der Schwenkens der Dreharme in horizontaler Lage verbleiben. Die Abhebelemente ergreifen mit ihren Auflageflächen jeden zweiten Formling, der während des Schwenkens der Dreharme von unten jeweils kurzzeitig vom Anschlag gehalten wird, heben ihn von der Förderbahn ab und führen ihn der Zweigförderbahn zu.

Nachteilig an dieser Ausgestaltung ist, daß nur jeder zweite Artikel umgesetzt werden kann und daß lediglich eine Aufteilung in zwei Teilströme möglich ist. Des weiteren müssen bei dieser Vorrichtung die horizontale Bewegung der Förderbahnen und die kreisförmige Bewegung des Abhebelemente synchronisiert werden, was zu einer aufwendigen Konstruktion und durch das kurzzeitige Anhalten des Artikel von dem Anschlag zu einer Begrenzung des Geschwindigkeit des Artikelstromes führt.

Somit ist es Aufgabe der vorliegenden Erfindung, eine Vorrichtung zu schaffen, mit der vorbestimmte Artikel aus einem Artikelstrom herausgenommen werden können und mit der diese herausgenommenen Artikel auf einen oder mehreren Artikelströme verteilt werden. Des weiteren soll eine Vereinfachung der Synchronisation von Fördervorrichtung und Versetzeinrichtung erreicht werden, wodurch der Bauaufwand verringert und die Leistungsbegrenzung vermindert wird.

Diese Aufgabe wird erfindungsgemäß durch die Merkmale des Patentanspruches 1 gelöst. Weitere Ausgestaltungen ergeben sich aus den Unteransprüchen.

Bei der erfindungsgemäßen Verteileinrichtung werden Artikel, die hintereinanderliegend auf einer ersten Fördervorrichtung gefördert werden, mittels einer Versetzeinrichtung auf eine zweite oder weitere Fördervorrichtung/en, die oberhalb der ersten Fördervorrichtung angeordnet ist, umgesetzt. Die Versetzeinrichtung weist Mittel auf, mit denen vorbestimmte Artikel von der ersten Fördervorrichtung selektiv abgehoben werden können, mit denen diese abgehobenen Artikel synchron mit der ersten Fördervorrichtung in einen Aufnahmebereich der zweiten oder einer weiteren Fördervorrichtung transportiert werden können und mit denen die Artikel auf der zweiten oder einer weiteren Fördervorrichtung in dessen Aufnahmebereich abgesetzt werden können. Besonders vorteilhaft an dieser Versetzeinrichtung ist, daß sie die Fördergeschwindigkeit der ersten Fördervorrichtung nicht beeinträchtigt.

Dabei weisen die Fördervorrichtungen Ketten oder Keilriemen auf. Ferner weist die Versetzeinrichtung ein Band auf, an welchem Sättel befestigt sind, die in die erste Fördervorrichtung von unten zwischen den Ketten oder Keilriemen eingreifen. Die Sättel bilden dabei die Mittel, mit denen die vorbestimmten Artikel abgehoben, weitertransportiert und auf der zweiten oder einer weiteren Fördervorrichtung abgesetzt werden. In einer weiteren Ausgestaltung der Erfindung läuft das Band mit der gleichen Geschwindigkeit wie die der ersten Fördervorrichtung. Durch diese Synchronisation der Fördergeschwindigkeit, mit der die Artikel gefördert werden, mit der Geschwindigkeit des Bandes der Versetzeinrichtung wird wiederum erreicht, daß die Geschwindigkeit des Artikelstroms nicht beeinträchtigt wird. Desweiteren ist an dieser Ausgestaltung vorteilhaft, daß das Erfassen der vorbestimmten Artikel in besonders einfacher Weise durch ein Abheben dieser aufgrund der von unten durchgreifenden Sättel erfolgt.

In einer weiteren vorteilhaften Ausgestaltung der Erfindung wird auch die zweite oder eine weitere Fördervorrichtung synchron mit der ersten Fördervorrichtung und mit der Versetzeinrichtung angetrieben. Ferner kann für ein besonderes einfaches Absetzen der umgesetzten Artikel die Förderebene der zweiten oder einer weiteren Fördervorrichtung parallel zur Förderebene der ersten Fördervorrichtung angeordnet sein.

Ein Ausführungsbeispiel der Erfindung ist in der Zeichnung dargestellt und wird im folgenden näher beschrieben.

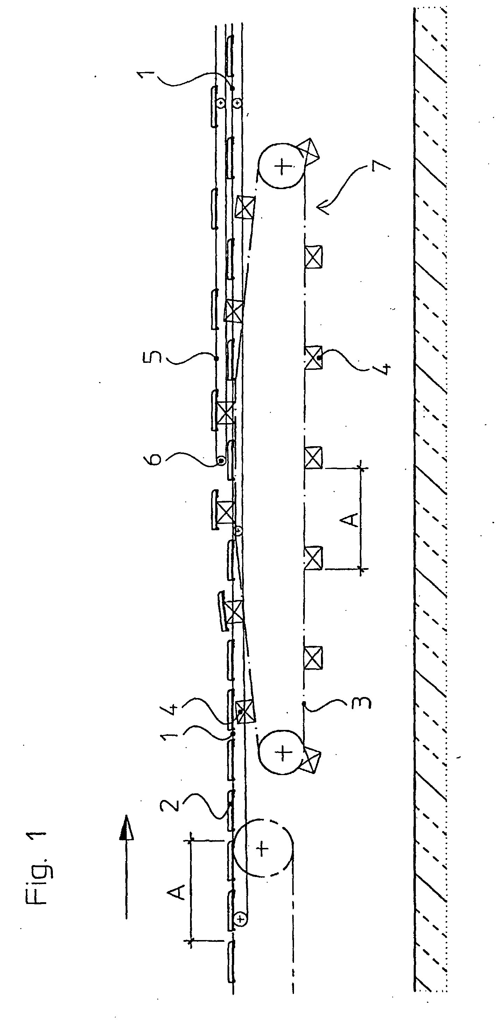

Die einzige Figur 1 zeigt eine Seitenansicht der erfindungsgemäßen Verteileinrichtung.

Es werden die Artikel 2 auf einer ersten Fördervorrichtung 1 gefördert. Die Fördervorrichtung 1 besteht aus zwei oder mehreren zueinander beabstandeten Ketten, Band- oder Keilriemen (nicht gezeigt), die mittels eines Motors in Richtung des Pfeils gedreht werden. Die Artikel 2 liegen hintereinander auf den Ketten oder Keilriemen und werden somit in Richtung des Pfeils von der Fördervorrichtung 1 gefördert. Ferner ist eine weitere zweite Fördervorrichtung 5 vorgesehen, auf die vorbestimmte Artikel aus dem Artikelstrom der Fördervorrichtung 1 verteilt werden sollen. Auch diese Fördervorrichtung 5 besteht aus zueinander beabstandeten Ketten oder Keilriemen, die von einem weiteren oder dem gleichen Motor angetrieben werden. Am linken Ende (Figur 1) weist die Fördervorrichtung 5 Umlenkrollen auf, die vorteilhafterweise in gleicher Weise wie die Ketten oder Keilriemen beabstandet sind. Ferner enthält die erfindungsgemäße Verteileinrichtung eine Versetzeinrichtung 7. Diese Versetzeinrichtung 7 weist in einem vorteilhaften Ausführungsbeispiel der Erfindung ein Band 3 auf, an dem Sättel 4 befestigt sind. Der Abstand, mit dem die Sättel 4 an dem Band 3 befestigt sind, entspricht einem Vielfachen des Abstands, mit dem die Artikel 2 auf der Fördervorrichtung 1 gefördert werden. Das Band 3 der Versetzeinrichtung 7 wird mit der gleichen Geschwindigkeit wie die der ersten Fördervorrichtung 1 angetrieben. Dabei wird das Band 3 so umgelenkt, daß die auf ihm befestigten Sättel 4 von unten durch die Ketten oder Keilriemen der ersten Fördervorrichtung 1 durchgreifen, und zwar soweit, daß die obere Fläche der durchgreifenden Sättel bis zu einer Höhe gelangt, die etwas oberhalb der Förderebene der zweiten Fördervorrichtung 5 ist, wobei jedoch das Band 3 der Versetzeinrichtung 7 immer unterhalb von den Ketten oder Keilriemen der ersten Fördervorrichtung 1 bleibt. Dabei erreichen die Sättel 4 ihren höchsten Punkt im Aufnahmebereich der zweiten Fördervorrichtung 5, der sich bezüglich der Förderrichtung hinter den Umlenkrollen 6 befindet. Nachdem die Sättel 4 ihren höchsten Punkt im Aufnahmebereich der zweiten Fördervorrichtung 5 erreicht haben, ist das Band 3 der Versetzeinrichtung 7 so geführt, daß sich die Sättel 4 wieder auf ein Niveau unterhalb der Fördervorrichtung 1 bewegen und dann nicht mehr durch die erste Fördervorrichtung 1 greifen.

Vorteilhafterweise werden die beiden Fördervorrichtungen 1, 5 und die Versetzeinrichtung 7 mit gleicher Geschwindigkeit angetrieben.

Im folgenden soll das Umsetzen vorbestimmter Artikel 2 von der ersten Fördervorrichtung 1 auf die zweite Fördervorrichtung 5 mittels der Versetzeinrichtung 7 anhand der Figur näher erläutert werden:

Die Artikel 2 liegen in einem vorbestimmten Abstand auf den Ketten oder Keilriemen der ersten Fördervorrichtung und werden von diesen in Richtung des Pfeils nach rechts gefördert. Gleichzeitig werden die Sättel 4 mittels des Bandes 3 der Versetzeinrichtung 7 in Richtung der Artikel 2 bewegt. Die Anordnung der Artikel 2 auf der Fördervorrichtung 1 ist so mit der Bewegung der Sättel 4 der Versetzeinrichtung 7 synchronisiert, daß immer dann, wenn ein Sattel durch den Abstand der Ketten oder Keilriemen der ersten Fördervorrichtung 1 durchgreift, über ihm ein Artikel 2 angeordnet ist. Da beispielsweise in dem gezeigten Ausführungsbeispiel der Abstand A der Sättel 4 doppelt so groß ist wie der vorbestimmte Abstand, mit dem die Artikel 2 auf der ersten Fördervorrichtung 1 gefördert werden, greift ein Sattel 4 unterhalb jedes zweiten Artikels der ersten Fördervorrichtung 1 durch die Ketten oder Keilriemen durch. Bei diesem Durchgriff werden die Artikel 2 von dem Sattel 4 von der ersten Fördervorrichtung 1 abgehoben. Daraufhin werden sie nicht mehr von den Ketten oder Keilriemen der ersten Fördervorrichtung 1 weiterbewegt. Da sich aber das Band der Versetzeinrichtung 7 mit der gleichen horizontalen Geschwindigkeit wie die Ketten oder Keilriemen der ersten Fördervorrichtung 1 bewegt, wird der abgehobene Artikel 2 auf einem Sattel 4 liegend horizontal mit der gleichen horizontalen Geschwindigkeit weiterbewegt und vertikal bis zur maximalen Höhe des Sattels 4 angehoben. Bei diesem höchsten Punkt befindet sich der Sattel 4 im Aufnahmebereich der zweiten Fördervorrichtung 5. Dabei befindet sich der abgehobene Artikel 2 oberhalb der Förderebene der zweiten Fördervorrichtung 5. Auf dieser Höhe bewegt sich der Sattel 4 horizontal so weit, bis er auch in beabstandeten Ketten oder Keilriemen der zweiten Fördervorrichtung 5 eingreift. Wird nun der Sattel 4 durch die Führung des Bandes 3 der Versetzeinrichtung 7 wieder hinunterbewegt, wird der auf dem Sattel 4 befindliche Artikel 2 auf der zweiten Fördervorrichtung 5 abgesetzt und von dieser weitergefördert.

Da für das Umsetzen einzig die Synchronisation der Fördergeschwindigkeit der ersten Fördervorrichtung 1 mit der Geschwindigkeit des Bandes 3 der Versetzeinrichtung 7 erforderlich ist, wird die Geschwindigkeit des Artikelstroms der ersten Fördervorrichtung 1 durch das Umsetzen in keiner Weise beeinträchtigt. Ferner kann durch die Anordnung der Sättel 4 auf dem Band 3 beliebig bestimmt werden, welcher Artikel 2 aus dem Artikelstrom des ersten Förderbandes 1 herausgenommen werden soll. Durch ein einfaches Versetzen der Sättel 4 auf dem Band 3 wird die erfindungsgemäße Verteileinrichtung sehr flexibel. Desweiteren ist ein kompliziertes Greifen oder Erfassen der zu verteilenden Artikel nicht nötig, da sie einfach von den Sätteln 4 von der ersten Fördervorrichtung herausgehoben werden.

## Patentansprüche

1. Verteileinrichtung mit einer ersten Fördervorrichtung (1), die Artikel (2) hintereinanderliegend fördert,
einer zweiten oder weiteren Fördervorrichtung/en (5), die oberhalb der ersten Fördervorrichtung (1) angeordnet ist/sind und
einer Versetzeinrichtung (7), welche vorbestimmte Artikel (2) von der ersten Fördervorrichtung (1) zur zweiten oder weiteren Fördervorrichtung (5) umsetzt,
wobei die Versetzeinrichtung (7) Mittel (3,4) zum selektiven Anheben der vorbestimmten Artikel (2) von der ersten Fördervorrichtung (1), zum mit der ersten Fördervorrichtung (1) synchronen Transport der abgehobenen Artikel (2) in einen Aufnahmebereich der zweiten oder einer weiteren Fördervorrichtung (5) und zum Absetzen der Artikel (2) auf der zweiten oder der weiteren Fördervorrichtung (5) in dessen Aufnahmebereich aufweist.
**dadurch gekennzeichnet,**
**daß** die erste und die zweite oder weitere Fördervorrichtung (1, 5) Ketten oder Keilriemen zur Aufnahme der Artikel (2) aufweisen und
**daß** die Versetzeinrichtung (7) ein Band (3) aufweist, an welchem Sättel (4) befestigt sind, die in die erste Fördervorrichtung (1) von unten zwischen den Ketten oder Keilriemen eingreifen und die vorbestimmten Artikel (2) von der ersten Fördervorrichtung (1) zur zweiten oder weiteren Fördervorrichtung (5) umsetzen.

2. Verteileinrichtung nach Anspruch 1,
**dadurch gekennzeichnet,**
**daß** das Band (3) mit der gleichen Geschwindigkeit wie die der ersten Fördervorrichtung (1) läuft.

3. Verteileinrichtung gemäß Anspruch 2,
**dadurch gekennzeichnet,**
**daß** der Abstand (A), in dem die Sättel (4) auf dem Band (3) angeordnet sind, einem Vielfachen der Abstands der auf der ersten Fördervorrichtung (1) zugeführten Artikel (2) entspricht.

4. Verteileinrichtung gemäß einem der vorhergehenden Ansprüche,
**dadurch gekennzeichnet,**
**daß** die zweite oder eine weitere Fördervorrichtung (5) synchron mit der ersten Fördervorrichtung (1) und mit der Versetzeinrichtung (7) angetrieben ist.

5. Verteileinrichtung gemäß einem der vorhergehenden Ansprüche,
**dadurch gekennzeichnet,**
**daß** die Förderebene der ersten Fördervorrichtung (1) parallel zur Förderebene der zweiten oder einer weiteren Fördervorrichtung (5) ist.

## Claims

1. A distribution device comprising a first conveying device (1) which conveys articles (2) in succession, a second or other conveying device (5) disposed above the first conveying device (1), and a shift device (7) which shifts particular articles (2) from the first conveying device (1) to the second or other conveying device (5),
wherein the shift device (7) comprises means (3, 4) for selectively lifting the particular articles (2) off the first conveying device (1), conveying the lifted articles (2) in synchronism with the first conveying device (1) to a receiving region on the second or other conveying device (5), and lowering the articles (2) on the second or other conveying device (5) in the receiving region thereof, **characterised in that**
the first and the second or other conveying device (1, 5) comprise chains or V-belts for receiving the articles (2) and
the shift device (7) comprises a belt (3) to which saddles (4) are fastened and engage from below between the chains or V-belts in the first conveying device (1) and shift the particular articles (2) from the first conveying device (1) to the second or other conveying device (5).

2. A distribution device according to claim 1, **characterised in that** the belt (3) runs at the same speed as the first conveying device (1).

3. A distribution device according to claim 2, **characterised in that** the spacing (A) at which the saddles (4) are disposed on the belt (3) is a multiple of the spacing between the articles (2) supplied on the first conveying device (1).

4. A distribution device according to any of the preceding claims, **characterised in that** the second or other conveying device (5) is driven in synchronism with the first conveying device (1) and with the shift device (7).

5. A distribution device according to any of the preceding claims, **characterised in that** the conveying plane of the first conveying device (1) is parallel with the conveying plane of the second or other conveying device (5).

## Revendications

1. Dispositif de distribution avec un premier convoyeur (1) qui transporte des articles (2) les uns derrière les autres,
un deuxième ou d'autres convoyeurs (5) qui sont disposés au-dessus du premier convoyeur (1), et
un dispositif de transfert (7) qui fait passer des articles (2) prédéfinis du premier convoyeur (1) au deuxième ou à un autre convoyeur (5),
le dispositif de transfert (7) comprenant des moyens (3, 4) pour soulever sélectivement les articles (2) prédéfinis du premier convoyeur (1), pour les amener, de manière synchrone par rapport au premier convoyeur (1), dans une zone de réception du ou des autres convoyeurs (5) et pour les déposer sur celui-ci, dans sa zone de réception,
**caractérisé en ce que** les premier et le second ou les autres convoyeurs (1, 5) comportent des chaînes ou des courroies trapézoïdales pour recevoir les articles (2) et
**en ce que** le dispositif de transfert (7) comporte une bande (3) à laquelle sont fixés des chariots (4) qui pénètrent par-dessous dans le premier convoyeur (1), entre les chaînes ou les courroies trapézoïdales, et qui font passer les articles (2) prédéfinis du premier convoyeur (1) au second ou aux autres convoyeurs (5).

2. Dispositif de distribution selon la revendication 1, **caractérisé en ce que** la bande (3) circule à la même vitesse que le premier convoyeur (1).

3. Dispositif de distribution selon la revendication 2, **caractérisé en ce que** l'écartemen (A) suivant lequel les chariots (4) sont disposés sur la bande (3) correspond à un multiple de l'écartement des articles (2) amenés sur le premier convoyeur (1).

4. Dispositif de distribution selon l'une des revendications précédentes, **caractérisé en ce que** le second ou un autre convoyeur (5) est entraîné de manière synchrone par rapport au premier convoyeur (1) et au dispositif de transfert (7).

5. Dispositif selon l'une des revendications précédentes, **caractérisé en ce que** le plan de transport du premier convoyeur (1) est parallèle au plan de transport du second ou de l'autre convoyeur (5).
